(19) Europäisches Patentamt
European Patent Office
Office européen des brevets

(11) **EP 3 984 978 A1**

(12) **EUROPEAN PATENT APPLICATION**

(43) Date of publication:
**20.04.2022 Bulletin 2022/16**

(21) Application number: **20202337.0**

(22) Date of filing: **16.10.2020**

(51) International Patent Classification (IPC):
***C04B 20/02*** *(2006.01)*

(52) Cooperative Patent Classification (CPC):
(C-Sets available)
**C04B 20/023;** C04B 14/26; C04B 2103/0088;
C04B 2111/00637; C04B 2111/62          (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **HeidelbergCement AG**
**69120 Heidelberg (DE)**

(72) Inventors:
• **Ben Haha, Mohsen**
**69117 Heidelberg (DE)**
• **Bolte, Gerd**
**69190 Walldorf (DE)**
• **Bullerjahn, Frank**
**69181 Leimen (DE)**
• **Dienemann, Wolfgang**
**69256 Mauer (DE)**
• **Skocek, Jan**
**69151 Neckargemünd (DE)**
• **Maciej, Zajac**
**69126 Heidelberg (DE)**

(74) Representative: **Zellentin & Partner mbB**
**Patentanwälte**
**Rubensstraße 30**
**67061 Ludwigshafen (DE)**

(54) **TRANSFORMATION OF LUMP SLAG INTO SUPPLEMENTARY CEMENTITIOUS MATERIAL BY CARBONATION**

(57)     The present invention relates to a supplementary cementitious material, a method for producing the supplementary cementitious material, the use of the supplementary cementitious material, a binder comprising the supplementary cementitious material, a method for the preparation of the binder and use of the binder to make hydraulic building materials like concrete.

EP 3 984 978 A1

(52) Cooperative Patent Classification (CPC): (Cont.)

C-Sets
C04B 20/023;
C04B 2103/0088

**EP 3 984 978 A1**

## Description

The present invention relates to a supplementary cementitious material. Further, the present invention relates to a method for producing the supplementary cementitious material. The present invention further concerns the use of the supplementary cementitious material. Moreover, the present invention relates to a hydraulic binder, a method for the preparation of the binder and use of the binder to make hydraulic building materials.

Cement is one of the most widely used products in building. Thus, reducing the requirement of natural resources in manufacturing cement, both mineral raw materials and fuels, has been a target for decades. Exchanging raw materials and fuel with waste and by-products is especially beneficial as is the use of such materials instead of cement clinker. To this end, ground granulated blast furnace slag has been extensively and successfully used as supplementary cementitious material to obtain composite binders.

But not all slags are suitable as supplementary cementitious material to obtain composite binders. The various types of slag are distinguished according to their origin. Blast-furnace slag is produced as a rock melt at approx. 1500 °C during the reduction process in the blast-furnace from the accompanying minerals of the iron ore and the slag formers used as additives, such as limestone or dolomite. Steelworks slag is also produced as a melt at about 1650 °C during the processing of pig iron, sponge iron or scrap into steel. It is formed from the oxidized by-elements of the pig iron and other metallic charge materials as well as the lime or burnt dolomite added for slag formation.

Blast-furnace slag and steel slag differ in their chemical composition as well their basicity. Basicity designates the weight ratios of certain oxides in the slag. For example the basicity $B_1$ defined as the weight ratio CaO to $SiO_2$ for steel slags usually ranges from 1.38 to 22.64. The basicity $B_1$ for blast-furnace slag typically ranges from 0.6 to 1.25. The basicity $B_2$ which also takes into account MgO for steel slags usually ranges from 1.55 to 16.22 and for blast furnace slag from 0.7 to 1.6. The basicity $B_3$ additionally considering $Al_2O_3$ for steel slags usually ranges from 1.08 to 3.17 and from 0.6 to 1.2 for blast furnace slag. The basicity $B_4$ defined as weight ratio CaO to $Fe_2O_3$ for steel slags typically ranges from 0.65 to 20.27 and from 20 to 350 for blast furnace slag. The basicity B1, B2, B3 and the ratio CaO to $Fe_2O_3$ B4 are determined by the equations as defined afterwards.

Blast-furnace slag is a by-product of pig iron production. Molten blast-furnace slag has a lower density (~2.8 $g/cm^3$) compared to pig iron (~7.8 $g/cm^3$) and floats on the iron. This enables it to be discharged from the blast-furnace separately from iron.

Approximately 400 million tons of blast-furnace slag are produced worldwide every year. Blast-furnace slag has been investigated and used for many decades. There are essentially two types of blast-furnace slag, air-cooled blast-furnace slag and granulated (glassy) blast-furnace slag. The latter is useful in ground form as so-called ground-granulated blast-furnace slag (GGBS or GGBFS). Blast-furnace slag contains various inorganic components such as $SiO_2$ (30-42 %), CaO (28-42 %), MgO (1-11 %), $Al_2O_3$ (7-20 %), and $Fe_2O_3$ (0.2-3 %), whereby the crystal structure of the granulated (glassy) blast-furnace slag is mainly X-ray amorphous and that of the air-cooled blast-furnace slag is essentially crystalline.

Granulated (glassy) blast-furnace slag (as defined in EN197-1) is formed by rapid cooling of the melt, which is formed in the blast-furnace during the smelting of iron ore. It generally contains at least 2/3 (by mass percentage) glassy solidified slag and exhibits hydraulic properties. Such ground granulated blast furnace slag is mainly used as a cement component according to EN197-1. Apart from the proven advantages in cement quality, such as low heat of hydration, good long-term stability, controlled alkali-silica reaction, and acid resistance, granulated blast furnace slag is used in the cement industry to reduce the clinker content in standard cements according to EN197-1 and thus also $CO_2$ emissions. It is known that the physical state of the slag is fundamental to its cementitious properties. R.D. Hooton, The reactivity and hydration products of blast-furnace slag, chapter 4, Department of Civil Engineering, University of Toronto, Toronto, Ontario, page 247-288,1987 and R. Galibert, Glass content influence upon hydraulic potential of blast furnace slag, National Slag Association, 184-2, 1-4 describe that the reactivity in cementitious binders decreases with an increase in the crystalline portion of a slag.

In order to produce the granulated (glassy) blast-furnace slag, molten slag is transported to a granulation plant. The blast furnace slag tends to cool down rapidly and its viscosity increases, which impairs the granulation behavior and, as a consequence, the reactivity. The most common method of slag granulation is to quench it under high excess of water and to split into fine particles. Although it is an effective method of quenching, water granulation has several disadvantages from an environmental as well as a production view point. The circulating process water has to be re-cooled. Further, the quenching water becomes contaminated with substances, which have been leached from the slag, e.g. sulphur and sulphides. Such substances react with water to hydrogen sulphides. Apart from potential air and water pollution the obtained slag can have a high residual-moisture content of up to 20 wt.-% and has to be dried prior to grinding for cementitious uses, which means an intensive energy input. Furthermore, the heat quantity of around 1.5 GJ/t bound in the molten slag remains unused in this process.

A remedy could be dry slag granulation, which allows this bound heat to be used. Alternative granulation processes such as air granulation have also been developed, but these cannot be used on a large scale because the cooling rate is too low.

The crystalline portions of a slag, such as representatives of the melilite group, bredigite or anorthite are inert for a longer period of 28 or even 90 days, which is significant for the cement quality. For this reason, crystalline slags do not appreciably contribute to the strength development of the cement and are therefore undesirable.

Air-cooled blast-furnace slag with a glassy portion (substantially) below 66 % has no or too small latent-hydraulic reactivity and therefore is often used as a substitute for stone and/or grit for road construction in many countries. The X-ray amorphous portion is often less than 15 %. Such materials are further suitable as aggregates in concrete due to their inert character and lead to very high hardness.

However, increasing the reactivity of crystalline slags or their reactive phase content and using them in cement as clinker substitutes is more in line with the idea of upcycling and common zero-waste concepts. The activation of such crystalline materials would have an enormous technical and ecological advantage.

F. Engström et al., Minerals Engineering 41 (2013), 46-52, relates to a study of the behaviour of the slag minerals mayenite, merwinite, akermanite, gehlenite, $\gamma$-silicate, and tricalcium aluminate during dissolution. The results show that the nature of the mineral as well as the crystal structure influences the dissolution. The rate of dissolution is generally slower at high pH values.

A. Ehrenberg, Cement International, 4 (2012), Vol. 10, 65-79, relates to a comparison of physical properties and reactivity of stored and fresh blast-furnace slag. This study shows that if stored granulated blast-furnace slag is correctly processed, no adverse effects on performance as latent hydraulic binder are to be expected. While blast-furnace slag is capable of binding $CO_2$ from the atmosphere or from environments with higher $CO_2$ concentrations the process is slow and has no significant practical effect. The study also shows that the reactivity of blast-furnace slag, its contribution to the strength of cement and concrete, is reduced by carbonization, if the milling is not carried out correctly. Since the characterization of the granulated blast-furnace slag fineness by Blaine value leads to misinterpretation, if the granulated blast-furnace slag has an increased loss of ignition.

S.-Y. Pan et al., J. of Cleaner production, 137 (2016), 617-631, relates to a study of the physicochemical properties of different steel slag types, such as basic oxygen furnace slag, electric arc furnace slag and ladle refining furnace slag, which have been carbonated.

The known proposals do not show a way to render air-cooled blast furnace slag and similarly constituted materials useful as supplementary cementitious materials without requiring undesirable amounts of energy and/or economical effort. Accordingly, it is an object of the invention to provide a supplementary cementitious material, wherein an unreactive crystalline blast-furnace slag has been transformed into a reactive supplementary cementitious material.

Surprisingly, it has now been found that after carbonization air-cooled blast furnace slag and lump slag, or other slags which have a basicity B1 - B4 in the given range, are reactive in hydraulic binders. The above mentioned problem is thus solved by carbonated air-cooled blast furnace slag, lump slag, or other slags as supplementary cementitious material according to the invention.

Thus, the invention relates to a supplementary cementitious material comprising Si, Ca, Mg, Al, Fe, wherein the X-ray amorphous portion is at least 15 % by weight based on the total weight of the supplementary cementitious material and wherein the sum of the amount of carbonated calcium and magnesium is at least 15 % by weight based on the total weight of the supplementary cementitious material, obtained by carbonization of a precursor material having a basicity $B_1$

$$B_1 = \frac{m(CaO)}{m(SiO_2)}$$

in the range of 0.60 to 1.25, determined from the amounts of the oxides measured by X-ray fluorescence (XRF).

The invention also relates to a method for producing a supplementary cementitious material comprising the steps:

i) providing a precursor material comprising Si, Ca, Mg, Al, Fe, having a basicity in the range of 0.60 to 1.25 and having an X-ray amorphous portion of less than 66 % having a particle size distribution with a $D_{90}$ of $\leq$ 500 $\mu$m, preferably $\leq$ 200 $\mu$m, determined by laser granulometry,
ii) carbonization of the precursor material of step i) to provide the supplementary cementitious material.

The X-ray amorphous portion of the precursor material is increased by carbonization. In other words, for a specific precursor material the X-ray amorphous portion is lower than the X-ray amorphous portion of the obtained supplementary cementitious material. The term glassy shall mean X-ray amorphous herein.

The invention also relates to the use of the supplementary cementitious material as defined above and below for making hydraulic building materials.

The invention further relates to a hydraulic binder comprising the supplementary cementitious material as defined above and below and a cement.

The invention further relates to a method for the manufacturing of a hydraulic binder as defined above and below, comprising

a) providing the supplementary cementitious material as defined above and below,
b) blending the supplementary cementitious material of a) with at least one cement to provide the binder,
c) optionally blending the binder of b) with the at least one admixture and/or additives to provide a hydraulical binder composition.

The invention further relates to the use of the binder as defined above and below for making hydraulic building materials, especially concrete.

The carbonated slag (supplementary cementitious material) according to the invention has at least one of the following advantages.

- Technologically and energetically complex wet granulation and subsequent drying can be avoided.
- $CO_2$ emissions can be reduced.
- Unreactive crystalline blast furnace slag can be processed into a reactive material without high energy requirement.
- The application of the carbonated blast furnace slag in cement as clinker substitute is possible and has several advantages.
- The inventive method represents a $CO_2$ sink for two reasons. $CO_2$ from the atmosphere or from a waste gas with a higher $CO_2$ concentration is bound in the supplementary cementitious material. Further, such a procedure reduces the $CO_2$ emissions once again, when the carbonated blast-furnace slag is used as substitute for clinker.
- The contribution to the compressive strength development of the carbonated slag according to the invention is increased in mixture with cement, for example measured according EN450 (activity index)

So as to simplify the description the following abbreviations that are usual in the field of cement are used herein: H - $H_2O$, C - CaO, A - $Al_2O_3$, F - $Fe_2O_3$, M - MgO, S - $SiO_2$ and $ - $SO_3$. Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more properties of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

In the context of the invention cement is used to designate a material that, after mixing with water to form a paste, is able to develop mechanical strength by hydraulic reaction. Thus, cement denotes a ground clinker or analogous hydraulic phases obtained by other routes like dicalcium silicate cement obtained by hydrothermal treatment. Binder or binder mixture means a material or mixture containing cement and developing mechanical strength by a hydraulic reaction with water, wherein the binder typically but not necessarily contains more components than the cement. Thus, geopolymer binder, super sulphated cement and composite cements are termed binder herein. A binder is used adding water or another liquid and mostly also aggregates as well as optionally admixtures and/or additives, to provide a paste that hardens resulting in a building element. Therefore, paste herein means a mixture of binder with water, especially but not limited to concrete and mortar.

A supplementary cementitious material (SCM) is herein defined as a pozzolanic and/or latent hydraulic material useful to replace a part of the cement in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an additive like a sulfate or calcium (hydr)oxide and/or products of the hydraulic reaction of the ground clinker, e.g. calcium silicates that liberate calcium hydroxide during hydration. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the boundary between latent hydraulic and pozzolanic materials is not clearly defined, for example fly ashes can be both, latent hydraulic and pozzolanic, depending on their calcium oxide content. Consequently, the term SCM designates both, latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

The supplementary cementitious material according to the invention is obtained by carbonization of a precursor material. Lump slags, especially air-cooled blast furnace slags, are used as precursor material. An important parameter for such slags is the so-called basicity, which describes the ratio of CaO (sometimes also CaO + MgO) to $SiO_2$. Accordingly, slags can be divided into "acidic" or "basic" slags, with CaO and MgO being the basic components and $SiO_2$ the acidic. In other words, the basicity of slags is an empirical quantity, which in its simplest form indicates the mass ratio of CaO and $SiO_2$ in metallurgical slags. The concept of slag basicity B therefore has nothing to do with chemical basicity, but is based solely on the fact that CaO, unlike the second component of the slag (e.g. $SiO_2$), forms the basic substance calcium hydroxide ($Ca(OH)_2$) when reacting with water, wherein m refers to mass. Accordingly, a slag basicity greater than one is referred to as basic slag and a basicity of less than one is referred to as acidic slag. The simplest basicity, $B_1$, is defined as:

$$B_1 = \frac{m(CaO)}{m(SiO_2)}$$

It is also possible to incorporate further components of slags (e.g. MgO, $Al_2O_3$, $Fe_2O_3$), which are also assigned to basic or acidic fractions. These must, however, be weighted with correction factors ($k_1$ or $k_2$) (m refers to mass), since, for example, MgO in the slag does not have the same basic effect as CaO when reacting with water. Accordingly, the basicity $B_2$ and $B_3$ are defined as:

$$B_2 = \frac{m(CaO) + k_1\, m(MgO)}{m(SiO_2)} \qquad B_3 = \frac{m(CaO) + k_1\, m(MgO)}{m(SiO_2) + k_2\, m(Al_2O_3)}$$

Another important factor for reactivity of slags is the weight ratio of calcium oxide to iron oxide:

$$B_4 = \frac{m(CaO)}{m(Fe_2O_3)}$$

The precursor material has a basicity $B_1$ in the range of 0.60 to 1.25. Further, the precursor material preferably has a basicity $B_2$ in the range of 0.7 to 1.6. Still further, the precursor material has a basicity $B_3$ in the range of 0.6 to 1.2. Preferably, the precursor material has a $CaO/Fe_2O_3$ ratio $B_4$ in the range of 20.00 to 350.00, preferably B4 is at least 30, most preferred at least 50. The basicities $B_1$, $B_2$, $B_3$ and the $CaO/Fe_2O_3$ ratio $B_4$ are determined by the equations as defined above.

Typically, the precursor material has an X-ray amorphous portion of less than 66 % by weight based on the total weight of the precursor material, preferably the X-ray amorphous portion is $\leq$ 55 % by weight, more preferred $\leq$ 40 % by weight.

In a preferred embodiment the precursor material is an air-cooled blast-furnace slag. The precursor material is preferably not a steel slag. Due to the high amount of iron, steel slag is not a suitable precursor material. The precursor material as described herein is obtained as known by a skilled person.

The precursor material generally comprises Si, Ca, Mg, Al, and Fe in the form of oxides and other chemical compounds. Preferably, the amount of $SiO_2$ is in the range from 25 to 45 % by weight and/or the amount of MgO is in the range from 3 to 15 % by weight and/or the amount of CaO is in the range from 20 to 45 % by weight and/or the amount of $Al_2O_3$ is in the range from 4 to 20 % by weight. Preferably, the amount of $Fe_2O_3$ is in the range from 0 to 2 % by weight. As usual, the amounts are calculated as oxides, regardless of the actual compound being present.

If the particle size distribution is not as desired, the precursor material is ground or crushed and ground. The

particle size $D_{90}$ is preferably $\leq 500~\mu m$, more preferred $\leq 200~\mu m$, determined by laser granulometry. Preferably, the $D_{90}$ is in the range from 10 $\mu m$ to 500 $\mu m$, more preferably from 10 $\mu m$ to 200 $\mu m$, especially from 25 $\mu m$ to 90 $\mu m$. The Rosin-Rammler slope n is preferably in the range from 0.6 to 1.4, especially from 0.7 to 1.2. Crushing and/or grinding is carried out with devices and methods well known to one skilled in the art.

The supplementary cementitious material according to the invention is obtained by carbonization of the precursor material as will be described in more detail later herein. The obtained supplementary cementitious material according to the invention generally comprises Si, Ca, Mg, Al, Fe in oxidized form and some of the Ca and Mg as carbonates. Preferably, the amount of $SiO_2$ is in the range from 25 to 45 % by weight. Preferably, the amount of Mg calculated as MgO is in the range from 3 to 15 % by weight. Preferably, the amount of Ca calculated as CaO is in the range from 20 to 45 % by weight. Preferably, the amount of Al calculated as $Al_2O_3$ is in the range from 4 to 20 % by weight. Preferably, the amount of Fe calculated as $Fe_2O_3$ is in the range from 0 to 2 % by weight. The amounts are calculated as oxides and on a loss on ignition (LOI) free basis.

The supplementary cementitious material according to the invention has an X-ray amorphous portion of at least 15 % by weight based on the total weight of the supplementary material. Preferably the X-ray amorphous portion is at least 25 % by weight based on the total weight of the supplementary material.

Carbonization generally increases the amount of calcium and magnesium carbonate in sum by at least 9 % by weight in the supplementary cementitious material according to the invention as compared to the precursor material. The amount of carbonated calcium ($CaCO_3$) in the supplementary cementitious material according to the invention is preferably at least 15 % by weight, more preferred at least 25 % by weight, based on the total weight of the supplementary cementitious material. The amount of the sum of carbonated calcium and magnesium ($CaCO_3$ and $MgCO_3$) is preferably at least 25 % by weight.

The supplementary cementitious material according to the invention usually has a particle size distribution with a $D_{90}$ of $\leq 500~\mu m$, more preferably $\leq 200~\mu m$, especially preferred $\leq 100~\mu m$, determined by laser granulometry. The supplementary cementitious material according to the invention preferably has a particle size distribution with a $D_{90}$ from 10 $\mu m$ to 500 $\mu m$, more preferably from 10 $\mu m$ to 200 $\mu m$, especially from 25 $\mu m$ to 90 $\mu m$. In a preferred embodiment, the supplementary cementitious material according to the invention has a Rosin-Rammler slope n in the range from 0.6 to 1.4, especially from 0.7 to 1.2.

The supplementary cementitious material according to the invention is obtained by carbonization of a precursor material. The method for producing a supplementary cementitious material comprises the steps

i) providing a precursor material comprising Si, Ca, Mg, Al, Fe, having basicity in the range of 0.60 to 1.25, having an X-ray amorphous portion of less than 66 %, and having a particle size distribution with a $D_{90}$ of $\leq 500~\mu m$ determined by laser granulometry,

ii) carbonization of the precursor material of step i) to provide the supplementary cementitious material.

The precursor material as described herein before is subjected to a carbonization step ii). Carbonization is a chemical reaction in which carbon dioxide, $CO_2$, is bound to the precursor materials. The obtained supplementary cementitious materials comprise salts of carbonic acid and alkali metals, alkali earth metal and iron. Other carbonates may be present, but their amounts are irrelevant. Additionally, since alkali metals carbonates, such as $Li_2CO_3$, $Na_2CO_3$ or $K_2CO_3$, are highly soluble in water, they are not useful for the long term $CO_2$ uptake. Furthermore, as iron carbonate, $FeCO_3$, is a high-pressure high-temperature phase, only calcium and magnesium carbonates, $CaCO_3$ and $MgCO_3$, are of practical relevance for $CO_2$ uptake. Hence, the ultimate $CO_2$ sequestration potential of a material can be calculated based on its calcium and magnesium content by the so-called Steinour (H. H. Steinour, "The Ultimate Products of the Carbonation of Portland Cement," Res. Dept Portland Cem. Assn Unpubl., 1956.) formula:

$$CO_{2(total)} = 0.785 \times (CaO - 0.56~CaCO_3 - 0.7~SO_3) + 1.091 \times (MgO - 0.479~MgCO_3),$$

where $CO_{2(total)}$ is the maximum theoretically achievable $CO_2$ sequestration related to the dry mass and CaO, $CaCO_3$, $SO_3$, MgO and $MgCO_3$ are weight fractions of corresponding oxides and phases.

In the carbonization reaction the $CO_2$ partial pressure is, for example, in the range from 0.5 bar to 100 bar, preferably from 1 bar to 90 bar, in particular from 2 bar to 40 bar.

All pressures indicated herein are absolute pressures.

The carbonization can be carried out at a discrete temperature and discrete pressure. Alternatively, the carbonization can be carried out in a ramp mode, whereby the reaction temperature and/or the $CO_2$ pressure at which the reaction mixture is converted increase over time.

In a first embodiment, the reaction takes place in only one reactor, whereby the reaction temperature and/or

the $CO_2$ pressure are increased continuously or in several steps (incremental), e.g. in 2, 3, 4 or more steps. Alternatively, the reaction can take place in a cascade of 2 or more reactors connected in series. In this case, in the direction of flow of the reaction mixture, at least one downstream (further) reactor has a higher reaction temperature and/or a higher $CO_2$ pressure than an upstream (previous) reactor. In a special design, each downstream reactor has a higher reaction temperature and/or a higher $CO_2$ pressure than the previous reactor.

Alternatively or additionally, when operating in one reactor as well as in several reactors, each reactor may have two or more reaction zones. In this case, each of the reactors may have two or more reaction zones with different temperature and/or $CO_2$ pressure. For example, a different temperature, preferably a higher temperature than in the first reaction zone, can be set in a second reaction zone, or a higher temperature than in a preceding reaction zone can be set in each subsequent reaction zone. Furthermore, for example, in a second reaction zone a different, preferably a higher pressure than in the first reaction zone, or in each subsequent reaction zone a higher pressure than in a preceding reaction zone, can be set.

The carbon dioxide for use in the method according to the invention can be used in gaseous, liquid, solid or supercritical form. It is also possible to use carbon dioxide-comprising gas mixtures available on the industrial scale.

In a preferred embodiment the concentration of $CO_2$ in step ii) is 10 Vol.-% to 100 Vol.-%, especially 20 Vol.-% to 80 Vol.-%.

The carbon dioxide and the precursor material are generally fed into the carbonization reaction, e.g. into step ii), in a molar ratio in the range from 0.2 to 20 moles and preferably in the range from 1 to 10 moles, carbon dioxide per mole of precursor material.

The carbonization in step ii) is preferably carried out at a temperature in the range of from 20 °C to 200 °C, preferably from 50 °C to 180 °C.

The carbonization time in step ii) is preferably in the range of 1 to 48 h, especially 4 to 24 h.

In one embodiment, the carbonization takes place in bulk. In another embodiment, the carbonization takes place in the presence of a solvent, wherein preferably the solvent is water.

A further embodiment of the invention is the use of the supplementary cementitious material as defined above and obtained by the method defined above for making hydraulic building materials such as binders, concrete, mortar, and special construction chemical mixtures like screed and tile adhesive.

Preferably, the supplementary cementitious material according to the invention can be used as main component in a composite binder. In another preferred embodiment the supplementary cementitious material according to the invention can be used as minor component in a composite binder. The supplementary cementitious material according to the invention can also be used as addition for concrete and mortar, i.e. be added during making the wet mixture instead of being mixed with the cement.

A further embodiment of the invention is a binder comprising the supplementary cementitious material as defined above and obtainable by the method as defined above and a cement. The cement is preferably selected from Portland cement, Portland composite cement, calcium sulfoaluminate cement, calcium aluminate cement and dicalcium silicate cement. Preferred cements are such according to DIN EN 197. Especially preferred are Portland cement, calcium sulfoaluminate cement and calcium aluminate cement.

In a preferred embodiment the binder comprises

- 1 to 88 % by weight, based on the total weight of the binder, supplementary cementitious material as defined above, based on the total weight of the binder, and
- 22 to 99 % by weight based on the total weight of the binder, cement as defined above.


For use the binder is made e.g. into mortar or concrete by mixing with water. Typically, a water:binder weight ratio (w/b) from 1 to 0.1, preferably from 0.75 to 0.15 , and most preferred from 0.65 to 0.35 is used. The SCM according to the invention and one or more optional additional SCMs added are included into the amount of binder for calculating the w/b. The mortar or concrete usually also contains aggregates as well as optionally admixtures and/or additives.

Aggregate can be any aggregate known as such. Normally sand and/or gravel of selected particle sizes is/are used. In some embodiments lightweight aggregate is used, typically as part of the aggregate but also as sole aggregate.

Admixtures are used to optimize the properties like setting time, hardening time, spread, viscosity and homogeneity as well as to impart desired properties to the final concrete part like strength, flexural modulus, freeze-thaw-resistance and many more. These admixtures are known per se and are used in their usual amounts. Admixtures like water reducing agents, plasticizers and super plasticizers to adjust consistency while keeping the w/b in the suitable range are preferably admixtures. Useful water reducing agents, plasticizers and super plasticizers are for example, but not exclusively, organic compounds with one or more functional group selected from carboxylate, sulfonate, phosphonate, phosphate or alcohol functional groups. Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acid and their salts, phosphonates, sugars (saccharides). Furthermore, it is possible to use admixtures that improve the concrete durability performance like air entrains or hydrophobic agents. Admixtures can also be added to the binder, if they are dry substances.

Often, also additives are contained. Usual are glass fibres, polymer fibres, cement kiln dust, silica fume, pigments, for example. One or more of them can be used in the usual amount. Additives are often added to the binder, since most are dry substances.

A further embodiment of the present invention is a method for the manufacturing of a hydraulic binder as defined above, comprising

a) providing the supplementary cementitious material as defined above,
b) blending the supplementary cementitious material of a) with at least one cement as defined above to provide the binder,
c) optionally blending the binder of b) with the at least one admixtures and/or additive and/or aggregate.

A further embodiment of the invention is a hydraulic building material such as concrete or mortar comprising the supplementary cementitious material or binder as defined above.

The invention will be illustrated further with reference to the examples that follow, without restricting the scope to the specific embodiments described. The invention includes all combinations of described and especially of preferred features that do not exclude each other.

If not otherwise specified, any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

Example 1

To obtain a lump slag for testing a glassy blast furnace slag with the composition determined by X-ray fluorescence spectroscopy (XRF) as given in Table 1 was heated in a laboratory furnace to 1200 °C and then slowly cooled in the switched-off furnace.

Table 1 Composition of slag

| constituent | amount [% by weight] |
|---|---|
| $SiO_2$ | 34.84 |
| $Al_2O_3$ | 11.12 |
| $TiO_2$ | 1.05 |
| MnO | 0.2 |
| $Fe_2O_3$ | 0.27 |
| CaO | 41.51 |
| MgO | 5.93 |
| $K_2O$ | 0.61 |
| $Na_2O$ | 0.22 |
| $SO_3$ | 2.79 |
| $P_2O_5$ | 0.01 |
| LOI 950 °C | (+0.49) |
| Glass content | 96.4 |

The obtained lump slag was ground in a ball mill obtaining a specific surface according to Blaine of about 5000 $cm^2$/g and a $D_{90}$ of ~ 28 $\mu$m. The ground lump slag was then carbonated in an autoclave (Pilotclav Type 3E / 31 Liter, Büchi AG) as follows. 200 g of lump slag were mixed with water (water/solid ratio of 0.5) and placed in porcelain bowls in the autoclave. After closing the autoclave, the temperature was increased to 80 °C. Subsequently, $CO_2$ was introduced up to a pressure of 40 bar. This temperature and pressure were kept constant for 24 hours. After opening the autoclave, the sample was taken out and dried at 105 °C until the weight was constant.

The phases in the lump slag and in the carbonated slag were determined with QXRD. The QXRD was taken using a diffractometer from Bruker with Cu anode in reflection geometry from $2\Theta$ = 4° - 35° with increments of 0.02 at 25 °C. Table 2 lists the phases identified with QXRD and their amount in % by weight.

Table 2: phases in carbonated slag

| Phase | amount in non-carbonated slag | amount in carbonated slag |
|---|---|---|
| Aragonite $CaCO_3$ | | 10 % |
| Calcite $CaCO_3$ | | 18 % |
| Quartz $SiO_2$ | | |
| Akermanite $Ca_2MgSi_2O_7$ | 41 % | 34 % |
| Gehlenite $Ca_2Al_2SiO_7$ | 37 % | 20 % |
| Rankinite $(Mg, Fe)_6(Si, Al)_4O_{10}(OH)_8$ | 12 % | |
| Belite $Ca_2SiO_4$ | 5% | |
| Perovskite $CaTiO_3$ | 1 % | 1 % |
| Rutile $TiO_2$ | 1 % | 1 % |
| X-ray amorphous | 3 % | 16 % |

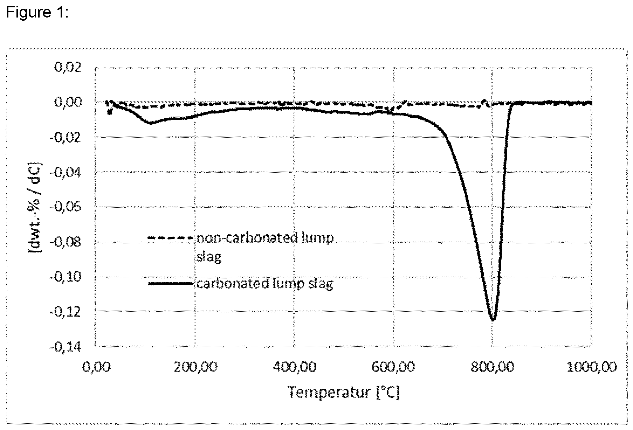

Thermogravimetric/differential thermal analyses (TG/DTA) were carried out. The samples (8 to 22 mg) were placed in a platinum sample cup for measurement. A temperature program from 50 to 1000 °C at 10 °C/min and nitrogen gas flow was used. Figure 1 shows the TGA thermogram of non-carbonated and carbonated lump slag. The comparison proves that lump slag has a potential for $CO_2$ absorption. An increase in carbonate content of 24 wt.% relative to the untreated sample is found.

Example 2:

To measure the activity all carbonated and non-carbonated samples from example 1 were mixed with Portland cement. The evaluation is based on EN 450, a standard describing the method for determining the contribution of a fly ash to the strength development. Accordingly, 100 % Portland cement was measured as reference and for the tests 25 % Portland cement were replaced by the test substance (lump slag or carbonated lump slag). Measurements of strength and mortar composition were carried out in accordance with EN 196-1. The results are shown in table 3 wherein the first two lines indicate the sample composition and the following lines list the measured strength and activity index calculated therefrom. The last column indicates the difference between carbonated and not carbonated slag.

Table 3

| amount of cement CEM I 42,5R | 100% | 75% | 75% | change from non-carbonated to carbonated |
|---|---|---|---|---|
| amount of slag | none | 25 % slag | 25 % carbonated slag | |
| compressive strength [MPa] after | | | | |
| 2 days | 38 | 28 | 27 | -1 MPa |
| 7 days | 47 | 36 | 40 | +4 MPa |
| 28 days | 57 | 44 | 55 | +11 MPa |
| 90 days | 62 | 50 | 63 | +13 MPa |

(continued)

| amount of cement CEM I 42,5R | 100% | 75% | 75% | change from non-carbonated to carbonated |
|---|---|---|---|---|
| activity index according to EN450 after | | | | 0 |
| 2 days | 100% | 74% | 71% | -3 pp |
| 7 days | 100% | 77% | 85% | +8 pp |
| 28 days | 100% | 77% | 96% | +19 pp |
| 90 days | 100% | 81% | 102% | +21 pp |

The activity of the lump slag is increased by carbonization. EN 450 specifies a minimum level of activity. The activity index after 28 days for a fly ash according standard should be at least 75 %, after 90 days at least 85 %. Lump slag reached these targets after carbonation. In contrast, not carbonated lump slag shows insufficient reactivity for use as SCM in composite binders, confirming general wisdom in the art.

Example 3

To examine different carbonization conditions the lump slag from example 1 was carbonated in an autoclave (Pilotclav Type 3E / 31 liter, Büchi AG) as follows. 50 g lump slag were mixed with water (water/solid ratio of 2.0) and placed in porcelain bowls in the autoclave and treated according to method A or method B described below. After opening the autoclave, the sample was taken out and dried at 105 °C until constant weight was achieved.

Method A: After closing the autoclave, the pressure in the autoclave was increased to 40 bar by introducing $N_2$ and then heated to 160 °C. When the temperature was reached, the pressure in the autoclave was increased to 100 bar by introducing $CO_2$. This temperature and pressure were kept constant for 24 hours.

Method B: After closing the autoclave, the pressure in the autoclave was increased to 40 bar by introducing $N_2$ and then heated to 160 °C. The temperature and pressure were kept constant. After 24 hours the pressure in the autoclave was increased to 100 bar by introducing $CO_2$. This temperature and pressure were kept constant for another 24 hours.

Table 4 lists the phases and their amount in % by weight as determined with QXRD.

Table 4:

| | amount in lump slag | |
|---|---|---|
| Phase | carbonated method A | carbonated method B |
| Aragonite $CaCO_3$ | 21 % | 18 % |
| Calcite $CaCO_3$ | 7 % | 9 % |
| Calcite magnesian $(Ca, Mg)CO_3$ | 10 % | 13 % |
| Quartz $SiO_2$ | | |
| Akermanite $Ca_2MgSi_2O_7$ | 20 % | 17 % |
| Gehlenite $Ca_2Al_2SiO_7$ | 13 % | 11 % |
| Rankinite $(Mg, Fe)_6(Si, Al)_4O_{10}(OH)_8$ | | |
| Belite $Ca_2SiO_4$ | | |
| Perovskite $CaTiO_3$ | 1 % | 1 % |
| Rutile $TiO_2$ | 1 % | 1 % |
| X-ray amorphous | 27 % | 30 % |

Table 5 shows the amount of $CO_2$ absorbed per dry mass of the unreacted sample in % by weight, determined with TG.

Table 5

| sample | lump slag | |
|---|---|---|
| | carbonated method A | carbonated method B |
| $CO_2$ absorption | 18 % | 19 % |

These results show that both methods A as well as B yielded sufficiently carbonated products useful as SCM as apparent from the phase composition.

**Claims**

1. A supplementary cementitious material comprising Si, Ca, Mg, Al, Fe, wherein the X-ray amorphous portion is at least 15 % by weight based on the total weight of the supplementary cementitious material and wherein the sum of the amount of carbonated calcium and magnesium is at least 15 % by weight based on the total weight of the supplementary cementitious material, obtained by carbonization of a precursor material having a basicity $B_1$

$$B_1 = \frac{m(CaO)}{m(SiO_2)}$$

in the range from 0.60 to 1.25, determined from the amounts of the oxides measured by X-ray fluorescence (XRF).

2. The supplementary cementitious material according to claim 1 having a particle size distribution with a $D_{90}$ of $\leq 500$ $\mu$m, preferably $\leq 200$ $\mu$m, determined by laser granulometry.

3. The supplementary cementitious material according to any of the preceding claims, wherein the precursor material is an air-cooled blast-furnace slag.

4. A method for producing a supplementary cementitious material comprising the steps

   i) providing a precursor material comprising Si, Ca, Mg, Al, Fe, having basicity $B_1$ defined as weight ratio of CaO to $SiO_2$ in the range from 0.60 to 1.25, having an X-ray amorphous portion of less than 66 %, and having a particle size distribution with a $D_{90}$ of $\leq 500$ $\mu$m determined by laser granulometry,
   ii) carbonization of the precursor material of step i) to provide the supplementary cementitious material.

5. The method according to claim 4, wherein the carbonization in step ii) is carried out at a temperature in the range from 20 °C to 200 °C and/or at a pressure in the range from 1 bar to 100 bar, preferably from 1 bar to 90 bar, in particular from 2 bar to 40 bar.

6. The method according to claim 4 or 5, wherein the carbonization time in step ii) is in the range of 1 to 48 hours, preferably in the range of 4 to 24 hours.

7. The method according to one of claims 4 to 6, wherein the concentration of $CO_2$ in step ii) is in the range of 10 to 100 Vol.-%, preferably in the range of 20 to 80 Vol.-%.

8. The method according to one of claims 4 to 7, wherein the precursor material has a weight ratio $CaO/Fe_2O_3$ from 20 to 350, preferably at least 30, more preferred at least 50.

9. The method according to one of claims 4 to 8, wherein the precursor material has an X-ray amorphous portion of less than 55 % by weight or less than 15 % by weight, and/or a basicity $B_2$ from 0.7 to 1.6 and/or a basicity $B_3$ from 0.6 to 1.2.

10. A supplementary cementitious material obtainable by the process defined in one of claims 4 to 9.

**11.** Use of the supplementary cementitious material as defined in one of claims 1 to 3 or 10 for making hydraulic building materials, especially composite binders, concrete, mortar, screed, or tile adhesive, most preferred composite binders or concrete.

**12.** A hydraulic binder comprising the supplementary cementitious material as defined in one of claims 1 to 3 or 10 and a cement, preferably selected from Portland cement, calcium sulfoaluminate cement and calcium aluminate cement.

**13.** The binder according to claim 12 comprising, based on the total weight of the binder, 1 to 88 % by weight supplementary cementitious material and 22 to 99 % by weight cement.

**14.** A method for the manufacturing of the hydraulic binder as defined in claim 12 or 13, comprising

a) providing the supplementary cementitious material as defined in one of claims 1 to 3 or 10,
b) blending the supplementary cementitious material of a) with at least one cement, preferably selected from Portland cement, calcium sulfoaluminate cement and calcium aluminate cement, to provide the binder,
c) optionally blending the binder of b) with the at least one admixture and/or additive.

**15.** Use of the binder as defined in claim 12 or 14 for making hydraulic building materials, preferably mortar or concrete.

Figure 1:

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN KUAN-WEI ET AL: "High-gravity carbonation of basic oxygen furnace slag for CO2fixation and utilization in blended cement", JOURNAL OF CLEANER PRODUCTION, ELSEVIER, AMSTERDAM, NL, vol. 124, 24 February 2016 (2016-02-24), pages 350-360, XP029522915, ISSN: 0959-6526, DOI: 10.1016/J.JCLEPRO.2016.02.072 * the whole document * ----- | 1-15 | INV. C04B720/23 |
| X | US 2003/131762 A1 (STROUP WILLIE W [US] ET AL) 17 July 2003 (2003-07-17) * the whole document * ----- | 1-15 | |

TECHNICAL FIELDS SEARCHED (IPC)

C04B

The present search report has been drawn up for all claims

| Place of search | Date of completion of the search | Examiner |
|---|---|---|
| Munich | 23 March 2021 | Roesky, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 2337

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2021

| Patent document cited in search report | | Publication date | Patent family member(s) | | Publication date |
|---|---|---|---|---|---|
| US 2003131762 | A1 | 17-07-2003 | BR | 0108483 A | 22-04-2003 |
| | | | CA | 2403111 A1 | 23-08-2001 |
| | | | JP | 2004500301 A | 08-01-2004 |
| | | | KR | 20020092959 A | 12-12-2002 |
| | | | MX | PA02008041 A | 06-09-2004 |
| | | | US | 2002038617 A1 | 04-04-2002 |
| | | | US | 2003131762 A1 | 17-07-2003 |
| | | | US | 2004231569 A1 | 25-11-2004 |
| | | | WO | 0160758 A1 | 23-08-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- The reactivity and hydration products of blast-furnace slag. **R.D. HOOTON.** Department of Civil Engineering. University of Toronto, 1987, 247-288
- **R. GALIBERT.** Glass content influence upon hydraulic potential of blast furnace slag. National Slag Association, vol. 184-2, 1-4
- **F. ENGSTRÖM et al.** *Minerals Engineering,* 2013, vol. 41, 46-52
- **A. EHRENBERG.** *Cement International, 4,* 2012, vol. 10, 65-79
- **S.-Y. PAN et al.** *J. of Cleaner production,* 2016, vol. 137, 617-631
- **H. H. STEINOUR.** The Ultimate Products of the Carbonation of Portland Cement. *Res. Dept Portland Cem. Assn Unpubl.,* 1956